# EUROPEAN PATENT APPLICATION

(11) **EP 1 717 080 A1**
(43) Date of publication of application: **02.11.2006**
(21) Application number: 05103505.3
(22) Date of filing: 28.04.2005
(51) Int. Cl.: B60J 7/02

(54) **Guiding arrangement**

(71) Applicant: Inalfa Roof Systems Group B.V., 5804 AH Venray (NL)
(72) Inventor: Nellen, Marcel Johan Christiaan, 5803 HL Venray (NL)
(74) Representative: Voncken, Bartholomeus Maria Ch.

(57) **Abstract**

A guiding arrangement is provided, comprising a first longitudinally extending member (1) and a second member (2), said second member (2) having two transversally spaced apart guide parts which slidingly engage opposite sides of said first member (1). One of said transversally spaced apart guide parts of the second member (2) is defined by two longitudinally spaced sub guide parts (4,5) which are longitudinally staggered in opposite directions relative to the transversally spaced guide part (3).

## Description

The invention relates to a guiding arrangement, comprising a first longitudinally extending member and a second member, said second member having two transversally spaced apart guide parts which slidingly engage opposite sides of said first member.

There are many mechanical constructions in which such guiding arrangements are used. A typical example of such a mechanical construction is an open roof construction for a vehicle. Such an open roof construction generally is provided with some kind of moving closure means for closing (or opening) a roof opening defined in a stationary roof part of the vehicle. For obtaining the desired movements of the closure means, mechanisms are provided having several parts moving relative to each other. For assuring a correct movement of such parts relative to each other, often guiding arrangements of the type referred to above are used.

While such a guiding arrangement assures a proper relative sliding movement of the first longitudinally extending member relative to the second member, it also should eliminate as much as possible relative movements between said members in a direction other than the desired sliding direction. This means, that the dimensions of the first member and second member have to be controlled very precisely, at one hand for preventing an excessive play therebetween, and at the other hand for preventing a jamming of the first and second members. Too large a play between the first and second members will lead to undesired movements, which often cause disturbing noises and an increased tear and wear. Jamming of the first and second members of course is highly undesired, because it will prevent the required sliding movement therebetween.

With the state of the art guiding arrangement, in which the second member basically is a U-shaped part of which the two opposite legs engage opposite sides of the first longitudinally extending member, it is very difficult to assure the correct relationship between the dimensions of the first and second members of the guiding arrangement.

In view of the above, it is an object of the present invention to provide an improved guiding arrangement, which does not suffer from the above-mentioned drawbacks.

Thus, in accordance with the present invention, a guiding arrangement is provided, comprising a first longitudinally extending member and a second member, said second member having two transversally spaced apart guide parts which slidingly engage opposite sides of said first member, characterized in that one of said transversally spaced apart guide parts of the second member is defined by two longitudinally spaced sub guide parts which are longitudinally staggered in opposite directions relative to the transversally spaced guide part.

As a result of the longitudinally staggered position of the sub guide parts relative to the transversally spaced guide part, it is possible to dimension the second member in such a manner that the first member is engaged with only a minimal amount of play (or even without any play) without the risk of the first and second member becoming jammed. This means, that the guiding arrangement in accordance with the present invention combines two advantageous functions: firstly ensuring a correct positioning of the first and second members transversally, and secondly allowing a sliding relative movement therebetween in a longitudinal direction.

Within the scope of the present invention "longitudinally staggered" means, that seen in a transverse direction a sub guide part is not completely overlapped by the guide part. Or, in other words, as seen in such a transverse direction, at least part of each sub guide part projects beyond the outer limits of the guide part.

In accordance with a preferred embodiment of the guiding arrangement according to the present invention, the sub guide parts of the second member are spaced apart longitudinally from the transversally spaced guide part. This means, that the sub guide parts are longitudinally staggered that far that, as seen in a transverse direction, no overlap occurs between a sub guide part and the guide part. Although it would be possible, that as seen in such a transverse direction, an outer limit of a sub guide part is positioned in close proximity to an outer limit of the guide part, generally a certain distance between both outer limits will be present. When devising the second member, the distance will be a fair compromise between obtaining a reduced outer dimension of the second member and obtaining an optimal function of the guiding arrangement (i.e. preventing play while allowing a sliding movement between the first and second members).

In yet another preferred embodiment of the guiding arrangement in accordance with the present invention, at least one of said sub guide parts and guide part of the second member is provided with a retention means for engaging a complementary shaped ridge of the first member.

The provision of such a retention means assures, that during all operational stages of the guiding arrangement the first and second members will maintain there operational relation, i.e. will not be disengaged from each other.

Preferably, the guide part is provided with a retention means. Providing the guide part with a retention means generally will be most effective, because the guide part is positioned in a central position (between the opposite sub guide parts, as seen in a transverse direction).

Although the retention means could have many different shapes, a constructively simple solution is provided by a hook-like element, which will engage behind the complementary shaped ridge of the first member which extends longitudinally.

As mentioned before, it is important that the engagement between the first longitudinally extending member and second member is such, that any play between these members is minimised as much as possible. Obtaining such a minimised, or even completely eliminated, play between said members may be assured easily, in one embodiment, by manufacturing the second member at least partially from a resilient material. As a result, the second member would be applied on to the first member with a certain degree of pre-tension without the risk of getting jammed. For example, the sub guide parts and/or the guide part of the second member are manufactured of a resilient material. However, it also would be possible that the sub guide parts and the guide part basically are rigid, and that parts of the second member interconnecting the sub guide parts and guide part are made of a resilient material. In both cases, the second member in a way acts as a spring member itself.

Hereinafter the invention will be elucidated while referring to the drawing, in which an examplary embodiment of a guiding arrangement in accordance with the present invention is illustrated.
Figure 1 shows, schematically, a perspective view of a first embodiment of a guiding arrangement in accordance with the present invention;
figure 2 shows, again schematically, a view according to II in figure 1;
figure 3 shows a view according to III in figure 1, however of an amended embodiment of the guiding arrangement, and
figure 4 shows a view in accordance with figure 2, however of yet another embodiment of the guiding arrangement.

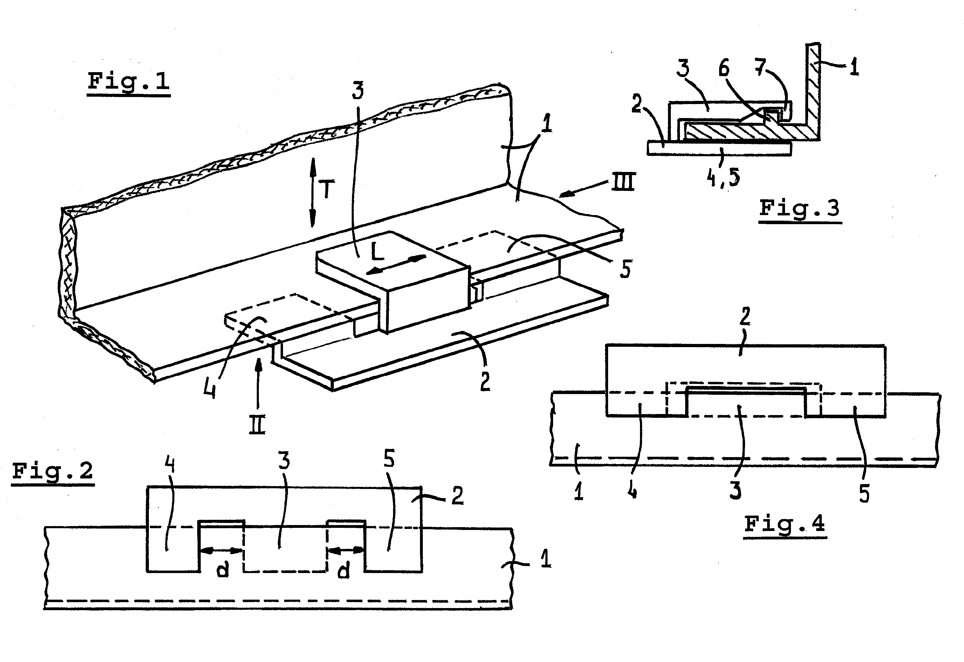

Firstly referring to figure 1, a guiding arrangement is illustrated comprising a first longitudinally extending member 1. Said first member 1 may, for example, be part of a stationary mechanical construction. As an example of such a stationary mechanical construction an open roof construction for a vehicle is mentioned, in which a moving panel is provided for opening and closing a roof opening provided in a stationary roof part of the vehicle. In such a case, first member 1 would be part of the stationary construction of such an open roof construction.

The guiding arrangement further comprises a second member 2 which can slide relative to the fist member in a longitudinal direction L. Said second member has a guide part 3 which engages a first side of the first member 1, and two sub guide parts 4 and 5 engaging an opposite side of the first member 1. Seen in a transverse direction T the guide part 3 and sub guide parts 4 and 5 are spaced apart in such a manner, that the corresponding part of the first longitudinally extending member 1 can be positioned therebetween.

As illustrated in figure 2, which shows a view of the guiding arrangement of figure 1 according to II (thus, in transverse direction T), the sub guide parts 4 and 5 of the second member 2 are spaced apart longitudinally from the transversally spaced guide part 3, in such a manner that a distance d appears therebetween, as seen in a transverse direction T. Is is noted, that it is not strictly necessary that distance d is equal at both sides of the guide part 3.

In contrast to the embodiment illustrated in figure 2, it also would be possible that there is a slight overlap between the sub guide parts 4, 5 and guide part 3, as indicated schematically in figure 4.

In figure 3 an alternative embodiment of the guiding arrangement is illustrated schematically. Figure 3 represents a view in accordance with III in figure 1, but with an alternative embodiment of the arrangement. In this alternative embodiment, the first longitudinally extending member 1 is provided with a ridge 6 which also extends longitudinally. The guide part 3 of the second member 2 is provided with a complimentary shaped retention means 7 (which in the present embodiment is hook-like shaped). As a result it can be prevented that the second member 2 disengages the first member 1.

The guide part 3 and/or the sub guide parts 4, 5 could be manufactured of a resilient material. However, it is also possible that said sub guide parts 4, 5 and guide part 3 are substantially rigid and that the remainder of the second member 2 is made of a resilient material.

Preferably, the shape of the second member 2 is such, that it engages the first member 1 with a certain amount of pre-tension.

The invention is not limited to the embodiments described before, which may be varied widely within the scope of the invention as defined by the appending claims.

## Claims

1. Guiding arrangement, comprising a first longitudinally extending member and a second member, said second member having two transversally spaced apart guide parts which slidingly engage opposite sides of said first member, **characterized in that** one of said transversally spaced apart guide parts of the second member is defined by two longitudinally spaced sub guide parts which are longitudinally staggered in opposite directions relative to the transversally spaced guide part.

2. Guiding arrangement according to claim 1, wherein the sub guide parts of the second member are spaced apart longitudinally from the transversally spaced guide part.

3. Guiding arrangement according to claim 1 or 2, wherein at least one of said sub guide parts and guide part of the second member is provided with a retention means for engaging a complementary shaped ridge of the first member.

4. Guiding arrangement according to claim 3, wherein the guide part is provided with a retention means.

5. Guiding arrangement according to claim 3 or 4, wherein said retention means comprises a hook-like element.

6. Guiding arrangement according to any of the previous claims, wherein the second member at least partially is manufactured from a resilient material.

7. Guiding arrangement according to claim 6, wherein the sub guide parts and/or the guide part of the second member are manufactured of a resilient material.
